(19) Europäisches Patentamt
European Patent Office
Office européen des brevets

(11) Veröffentlichungsnummer: **0 289 755 B1**

(12) **EUROPÄISCHE PATENTSCHRIFT**

(45) Veröffentlichungstag der Patentschrift: **04.09.91**

(51) Int. Cl.⁵: **B01D 15/08, G01N 30/56**

(21) Anmeldenummer: **88104232.9**

(22) Anmeldetag: **17.03.88**

(54) Absorptionskolonne zum chromatographischen Trennen von Stoffgemischen.

(30) Priorität: **04.05.87 CH 1679/87**

(43) Veröffentlichungstag der Anmeldung:
**09.11.88 Patentblatt 88/45**

(45) Bekanntmachung des Hinweises auf die
Patenterteilung:
**04.09.91 Patentblatt 91/36**

(84) Benannte Vertragsstaaten:
**CH DE GB LI SE**

(56) Entgegenhaltungen:
**GB-A- 1 203 439**
**US-A- 3 250 058**
**US-A- 3 626 666**

(73) Patentinhaber: **GEBRÜDER SULZER AKTIENGE-
SELLSCHAFT**
**Zürcherstrasse 9**
**CH-8401 Winterthur(CH)**

(72) Erfinder: **Brändli, Ernst, Dr.**
**Brühlbergstrasse 99**
**CH-8400 Winterthur(CH)**

# Beschreibung

Die Erfindung betrifft eine Adsorptionskolonne zum chromatographischen Trennen von Stoffgemischen gemäss dem Oberbegriff des Anspruchs 1.

Das Anwendungsgebiet der Erfindung betrifft insbesondere ein chromatographisches Verfahren mit einer flüssigen und einer festen Phase.

Es sind Verfahren zur Beschleunigung der chromatographischen Trennung von Stoffgemischen mit Hilfe von erhöhtem hydrostatischen Druck bekannt. Derartige Verfahren führen dazu, dass bei Erreichen einer bestimmten Strömungsgeschwindigkeit des Stoffgemisches, der Druckabfall in der Kolonne wegen der Verdichtung bzw. des Zusammensackens des kompressiblen Chromatographieträgermaterials unwirtschaftlich hoch und die Trennleistung herabgesetzt wird (vergleiche beispielsweise die Publikation: Biotechnology and Bioengineering, Vol. XXIV, p.2279-2282 (1982), Autor: Sada, E., et al.).

Aus der EP-A-0 176 891 ist eine Adsorptionskolonne für Hochdruckflüssigchromatographie bekannt, die im wesentlichen aus einem, mit einem Sorbens befüllbaren Rohr und einer Einlass- und einer Auslassvorrichtung an den Enden des Rohres bestehen, wobei in dem Rohr zusätzlich Stützelemente zur Stabilisierung der Sorbenspackung vorgesehen sind. Diese Stützelemente können beispielsweise aus Lochplatten oder einem wabenförmig aufgebauten Gerüst bestehen, und sollen dazu dienen, den Aufbau einer Feststoffspannung beim Befüllen der Kolonne nicht zu behindern, aber einer Entspannung der Sorbenspackung entgegenzuwirken. Auf die Trennleistung der Kolonne haben diese Einbauelemente keinen Einfluss.

Der Erfindung liegt als Aufgabe eine solche Ausführungsform einer Adsorptionskolonne der eingangs beschriebenen Art zugrunde, in welcher die vorstehend beschriebenen Nachteile nicht auftreten, und in der in wirtschaftlicher Weise eine Trennung eines Stoffgemisches in einzelne Komponenten durchgeführt werden kann.

Diese Aufgabe wird mit Hilfe der im Kennzeichen des Anspruchs 1 angegebenen Massnahmen gelöst.

Die Lagen der Packungselemente können z.B. aus Blech oder Kunststoff bestehen. Vorteilhafterweise bestehen die Lagen aus einem porösen Material, z.B. aus einem Metall-oder Kunststoffgewebe oder aus gelochten Platten. Hierbei sind die "Poren" so gross, dass sie sowohl für das Stoffgemisch als auch für das Chromatographieträgermaterial durchlässig sind.

Mit Hilfe der Erfindung wird erreicht, dass einerseits das Chromatographieträgermaterial insbesondere am Kolonnenaustritt nicht in unzulässigem Masse verdichtet wird und das Stoffgemisch schneller die Füllung durchströmen kann.

Ein weiterer wesentlicher Vorteil der Erfindung besteht darin, dass aufgrund einer wiederholten Aufteilung des Stoffgemisches in eine Anzahl von Teilströmen, die jeweils schräg zur Kolonnenachse abgelenkt, zusammengeführt und wieder aufgeteilt werden, das jeweils in Teilströme aufgeteilte Stoffgemisch längere zick-zackartige Strömungswege durchläuft und somit mit dem Chromatographiematerial wiederholt in Kontakt gebracht wird, wodurch der Trenneffekt wesentlich erhöht werden kann.

In den Ansprüchen 2 und 3 sind Ausführungsformen von Packungselementen beschrieben, wie sie im ersten Fall z.B. aus den CH-Patentschriften 398 503, 537 208 und 617 357 und im zweiten Fall z.B. aus der CH-C- 642 564 bekannt sind.

Die Erfindung wird im folgenden anhand eines in der Zeichnung dargestellten Ausführungsbeispiels beschrieben.

Die Fig. 1 zeigt in schematischer Darstellungsweise eine Adsorptionskolonne mit fünf übereinander angeordneten Packungselementen, wobei benachbarte Packungselemente jeweils um einen Winkel von 90° gegeneinander verschwenkt sind.

Die Fig. 2 zeigt in perspektivischer Darstellung die einzelnen Lagen eines Packungselementes vor dem Zusammenbau.

In der Fig. 3 sind in einem Teil-Längsschnitt zwei benachbarte Packungselemente und in der Fig. 4 zwei Teilquerschnitte längs der Schnittlinien A-A bzw. B-B der Fig. 3 dargestellt.

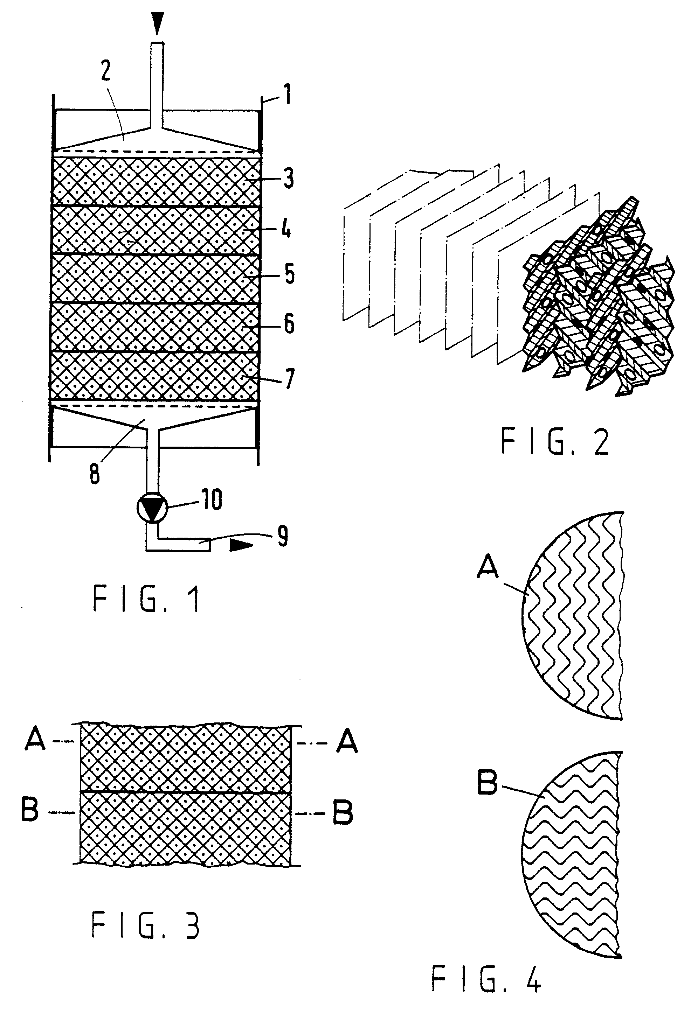

In der in Fig. 1 dargestellten Adsorptionskolonne 1, die im Ausführungsbeispiel einen kreisförmigen Querschnitt aufweist, ist im oberen Teil eine Verteilvorrichtung 2 für das zu trennende Stoffgemisch und im unteren Teil eine Sammelvorrichtung 8 angeordnet. Von dieser Sammelvorrichtung führt eine Leitung 9 zu nicht dargestellten Sammelgefässen für die einzelnen Komponenten des aufgetrennten Stoffgemisches. Die Geschwindigkeit des Abführens und dadurch der Durchfluss der Stoffgemischlösung durch die Kolonne 1 wird mit Hilfe einer Pumpe 10 geregelt.

Die aufzutrennende Stoffgemischlösung durchströmt die Packungselemente 3 bis 7, deren Zwischenräume mit einem Chromatographieträgermaterial gefüllt sind in der vorstehend beschriebenen Weise, d.h. sie wird ständig in Teilströme aufgeteilt und zusammengeführt, wobei aufgrund der Formgebung der Packungselemente die Teilströme zickzackartige Wege durchlaufen. Im vorliegenden Ausführungsbeispiel sollen die Lagen der Packungselemente aus einem porösen Material, z.B. einem Gewebe bestehen.

Aufgrund dessen, dass benachbarte Packungselemente gegeneinander um einen Winkel von 90° verschwenkt sind, erfolgt eine ausgezeichnete Verteilung und Durchmischung über den ganzen Kolonnenquerschnitt (vergleiche Fig. 3 und 4).

Nachstehend werden zwei Zahlenbeispiele für den Gegenstand der Erfindung angegeben.

1. Beispiel.

Vergleich des Durchflusses (Leerrohrgeschwindigkeit) als Funktion des hydrostatischen Drucks in einer Chromatographiekolonne a) ohne und b) mit einem erfindungsgemässen Einbau von Packungselementen.

a) In einer Kolonne von 15 cm Innendurchmesser wurde eine 17 cm hohe Schüttung von Sephadex ® G-50, fine, (quervernetztes Dextran) eingebracht. Der Durchfluss von 0.01 m Phosphatpuffer mit pH 7.0 bei Raumtemperatur wurde als Funktion des hydrostatischen Drucks gemessen.

Die Leerrohrgeschwindigkeit steigt mit zunehmendem hydrostatischen Druck nicht linear an und nähert sich asymptotisch einem maximalen Wert von 75 cm/h bei einem hydrostatischen Druck von 14.7 kPa (1.5 m Wassersäule). Ein weiteres Erhöhen des hydrostatischen Druckes führt als Folge der zunehmenden Verdichtung der Füllung zu herabgesetzten Leerrohrgeschwindigkeiten.

b) Die experimentelle Anordnung von a) wurde übernommen. Zusätzlich wurde ein 17 cm hohes Packungselement gemäss der CH-C- 398 503 mit einem hydraulischen Durchmesser von 15 mm eingesetzt.

Bei dieser Ausführung wurde eine lineare Abhängigkeit der Leerrohrgeschwindigkeit vom hydrostatischen Druck gemessen. Beispielsweise wurde bei 14.7 kPa (1.5 m Wassersäule) eine Geschwindigkeit von 150 cm/h erreicht. Es fand keine merkbare Verdichtung der Füllung statt.

Bei diesem Beispiel zeigt es sich, dass durch den erfindungsgemässen Einsatz der Packungselemente in der Chromatographiekolonne die Leerrohrgeschwindigkeit bei sonst gleichen Verhältnissen auf das Zweifache gesteigert werden kann.

Es wurde zusätzlich gefunden, dass die maximal erreichbaren Leerrohrgeschwindigkeiten in Chromatographie-Kolonnen ohne erfindungsgemässen Einbau von Packungselementen, in deren Zwischenräume kompressibles Füllungsmaterial, z.B. von Sephadex® enthalten ist, im umgekehrten Sinne zur Füllhöhe des Chromatographieträgermaterials verlaufen.

2. Beispiel

Vergleich des Durchflusses (Leerrohrgeschwindigkeit) als Funktion des hydrostatischen Druckes in einer Chromatographiekolonne a) ohne und b) mit einem erfindungsgemässen Einbau von Packungselementen.

a) In eine Kolonne von 15 cm Innendurchmesser wurde eine 68 cm hohe Füllung von Sephadex ® G-50, fine, eingebracht und der Durchfluss analog z.B. 1 a) in Abhängigkeit vom hydrostatischen Druck gemessen. Die Leerrohrgeschwindigkeit stieg mit zunehmendem hydrostatischen Druck nicht linear an und näherte sich asymptotisch einem maximalen Wert von 27 cm/h bei einem hydrostatischen Druck von 8.8 kPa (0.9 m Wassersäule). Eine Steigerung des Durchflusses wird verhindert durch die zunehmende Verdichtung der Füllung.

b) Die experimentelle Anordnung von a) wurde übernommen. Zusätzlich wurden vier Packungselemente gemäss der CH-C- 398 503 mit einem hydraulischen Durchmesser von 15 mm eingesetzt.

Bei dieser Ausführung wurde eine lineare Abhängigkeit der Leerrohrgeschwindigkeit vom hydrostatischen Druck gemessen. Bei 8.8 kPa (0.9 m Wassersäule) betrug sie 30 cm/h, bei ca. 34.2 kPa (3.5 m Wassersäule) 150 cm/h.

**Patentansprüche**

1. Adsorptionskolonne zum chromatographischen Trennen von flüssigen Stoffgemischen, welche zum grössten Teil mit einem kompressiblen Chromatographieträger gefüllt ist, wobei am einen Ende der Adsorptionskolonne eine Zuführung für das zu trennende Stoffgemisch und am anderen Ende ein Sammler für die Wegführung der einzelnen Stoffkomponenten angeordnet ist, und wobei im Füllungsraum der Adsorptionskolonne Einbauten angeordnet sind, dadurch **gekennzeichnet**, dass diese Einbauten als Packungselemente ausgebildet sind, welche aus einer Mehrzahl von Lagen bestehen, wobei sich jeweils zwei benachbarte Lagen an ihren Auflagestellen berühren und zwischen benachbarten Lagen sich kreuzende Strömungskanäle vorhanden sind.

2. Adsorptionskolonne nach Anspruch 1, dadurch gekennzeichnet, dass die Packungselemente aus parallel zur Kolonne angeordneten und einander berührenden Lagen bestehen, wobei mindestens eine von zwei sich berührenden Lagen geriffelt ist und dass die Riffelungen von aufeinanderfolgenden geriffelten Lagen verschiedene Richtungen haben und mindestens die Riffelung einer von zwei aufeinanderfolgenden geriffelten Lagen im Winkel zur Kolonnenachse liegt.

3. Adsorptionskolonne nach Anspruch 1, dadurch gekennzeichnet, dass die Packungselemente aus sich kreuzenden Stegen bestehen, die einen Winkel gegenüber der Rohrachse aufweisen, wobei die Stege der Einbauelemente in mindestens zwei Gruppen angeordnet sind und die Stege innerhalb einer jeden Gruppe im wesentlichen parallel gerichtet sind und sich die Stege der einen Gruppe mit den Stegen der anderen Gruppe kreuzen.

4. Adsorptionskolonne nach Anspruch 1, dadurch gekennzeichnet, dass die Lagen aus einem porösen Material bestehen.

5. Adsorptionskolonne nach Anspruch 2 oder 3, dadurch gekennzeichnet, dass mindestens zwei Einbauelemente in der Kolonne hintereinander angeordnet sind, wobei die aneinandergrenzenden Elemente bezüglich der Kolonnenachse um einen Winkel von vorzugsweise 90° gegeneinander verschwenkt sind.

**Claims**

1. An adsorption column for the chromatographic separation of mixtures of liquid substances, most of the column being filled with a compressible chromatography carrier, a feed for the mixture of substances for separation being provided at one end of the adsorption column and a collector for discharging the individual substance components being provided at the other end, furniture being provided In the adsorption column filling space, characterised in that said furniture is formed as packing elements consisting of a plurality of layers, each two adjacent layers being in contact at their points of support and crossing flow ducts being present between adjacent layers.

2. An adsorption column according to claim 1, characterised in that the packing elements consist of layers disposed in parallel to the column and in contact with one another, at least one of two contacting layers being fluted, and in that the flutings of consecutive fluted layers have different directions and at least the fluting of one of two consecutive fluted layers is at an angle to the column axis.

3. An adsorption column according to claim 1, characterised in that the packing elements consist of crossing webs at an angle to the tube axis, the webs of the furniture elements being disposed in at least two coups and the webs Inside each group being directed substantially parallel and the webs of one group crossing with the webs of the other group.

4. An adsorption column according to claim 1, characterised in that the layers consist of a porous material.

5. An adsorption column according to claim 2 or 3, characterised in that at least two furniture elements are disposed consecutively in the column, the adjacent elements being pivoted through an angle of preferably 90° to one another with respect to the column axis.

**Revendications**

1. Colonne d'adsorption pour la séparation chromatographique de mélanges liquides de substances, qui est chargée en majeure partie d'un support chromatographique compressible, avec à une extrémité de la colonne une arrivée du mélange de matières à séparer et à l'autre extrémité un collecteur servant à l'enlèvement des composants individuels, et avec disposition de chicanes dans l'espace de remplissage de la colonne d'adsorption, caractérisée en ce que ces chicanes sont réalisées comme éléments de garnissage qui sont constitués d'une multiplicité de couches, dont chaque fois deux couches voisines se touchent au niveau de leurs points d'appui, et des canaux d'écoulement qui se croisent sont présents entre des couches voisines.

2. Colonne d'adsorption suivant la revendication 1, caractérisée en ce que les éléments de garnissage sont constitués de couches disposées parallèlement à la colonne et se touchant entre elles, au moins l'une de deux couches en contact étant cannelée et les cannelures de couches cannelées successives ayant des directions différentes, et les cannelures d'au moins l'une de deux couches cannelées successives faisant un angle par rapport à l'axe de la colonne.

3. Colonne d'adsorption suivant la revendication 1, caractérisée en ce que les éléments de garnissage sont constitués de nervures qui s'entrecroisent et qui font un angle par rapport à l'axe du tube, les nervures des chicanes étant disposées en au moins deux groupes et les nervures à l'intérieur de chaque groupe étant principalement parallèles entre elles et celles d'un groupe se croisant avec celles de l'autre groupe.

4. Colonne d'adsorption suivant la revendication 1, caractérisée en ce que les couches sont constituées d'une matière poreuse.

5. Colonne d'adsorption suivant la revendication 2 ou 3, caractérisée en ce qu'au moins deux chicanes sont disposées l'une derrière l'autre dans la colonne, les chicanes contiguës étant écartées par pivotement l'une de l'autre d'un angle de préférence égal à 90° par rapport à l'axe de la colonne.

F I G. 1

F I G. 2

F I G. 3

F I G. 4